# EUROPÄISCHE PATENTSCHRIFT

(11) **EP 1 829 378 B1**
(45) Veröffentlichungstag und Bekanntmachung des Hinweises auf die Patenterteilung: **14.08.2013**
(21) Anmeldenummer: 05819040.6
(22) Anmeldetag: 09.12.2005
(51) Int. Cl.: H04N 7/26

(54) **BILDENCODIERVERFAHREN, SOWIE DAZUGEHÖRIGES BILDDECODIERVERFAHREN, ENCODIERVORRICHTUNG UND DECODIERVORRICHTUNG**
IMAGE ENCODING METHOD AND ASSOCIATED IMAGE DECODING METHOD, ENCODING DEVICE, AND DECODING DEVICE
PROCEDE DE CODAGE D'IMAGES, PROCEDE DE DECODAGE D'IMAGES CORRESPONDANT, DISPOSITIF DE CODAGE ET DISPOSITIF DE DECODAGE

(30) Priorität: 22.12.2004 DE 102004061906
(43) Veröffentlichungstag der Anmeldung: 05.09.2007
(73) Patentinhaber: Siemens Aktiengesellschaft, 80333 München (DE)
(72) Erfinder: AMON, Peter, 81675 München (DE); BÄSE, Gero, 81371 München (DE); HUTTER, Andreas, 81673 München (DE); PANDEL, Jürgen, 83620 Feldkirchen-Westerham (DE); TIMMERMANN, Benoit, 85604 Zorneding (DE)
(86) Internationale Anmeldenummer: PCT/EP2005/056626
(87) Internationale Veröffentlichungsnummer: WO 2006/067053

(56) Entgegenhaltungen:
- US-A1- 2002 071 485
- ANDREOPOULOS Y ET AL: "SPATIO-TEMPORAL-SNR SCALABLE WAVELET CODING WITH MOTION-COMPENSATED DCT BASE-LAYER ARCHITECTURES" PROCEEDINGS. INTERNATIONAL CONFERENCE ON IMAGE PROCESSING, Bd. 3, 14. September 2003 (2003-09-14), Seiten II-795, XP001181846
- MRAK M ET AL: "An overview of basic techniques behind scalable video coding" ELECTRONICS IN MARINE, 2004. PROCEEDINGS ELMAR 2004. 46TH INTERNATIONAL SYMPOSIUM ZADAR, CROATIA 16-18 JUNE 2004, PISCATAWAY, NJ, USA,IEEE, 16. Juni 2004 (2004-06-16), Seiten 597-602, XP010739927 ISBN: 953-7044-02-5
- SCHWARZ H ET AL: "Scalable Extension of H.264/AVC" ISO/IEC JTC1/CS29/WG11 MPEG04/M10569/S03, XX, XX, März 2004 (2004-03), Seiten 1-39, XP002340402
- ANDREOPOULOS Y ET AL: "SPATIO-TEMPORAL-SNR SCALABLE WAVELET CODING WITH MOTION-COMPENSATED DCT BASE-LAYER ARCHITECTURES", PROCEEDINGS. INTERNATIONAL CONFERENCE ON IMAGE PROCESSING, XX, XX, vol. 3, 14 September 2003 (2003-09-14), pages II-795, XP001181846,
- MRAK M ET AL: "An overview of basic techniques behind scalable video coding", ELECTRONICS IN MARINE, 2004. PROCEEDINGS ELMAR 2004. 46TH INTERNATIONA L SYMPOSIUM ZADAR, CROATIA 16-18 JUNE 2004, PISCATAWAY, NJ, USA,IEEE, 16 June 2004 (2004-06-16), pages 597-602, XP010739927, ISBN: 978-953-7044-02-2
- SCHWARZ H ET AL: "Scalable Extension of H.264/AVC", ISO/IEC JTC1/CS29/WG11 MPEG04/M10569/S03, XX, XX, 1 March 2004 (2004-03-01), pages 1-39, XP002340402,
- Y. ANDREOPOULOS ET AL.: "Spatio-Temporal-SNR Scalable Wavelet Coding with Motion-Compensated DCT Base-Layer Architectures", PROCEEDINGS, INTERNATIONAL CONFERENCE ON IMAGE PROCESSING, vol. 3, 14 September 2003 (2003-09-14), page II-795,
- M. MRAK ET AL.: "An overview of basic techniques behind scalable video coding", ELECTRONICS IN MARINE, 2004, PROCEEDINGS ELMAR 2004, 46TH INTERNATIONAL SYMPOSIUM ZADAR, 16 June 2004 (2004-06-16), pages 597-602,
- H. SCHWARZ ET AL.: "Scalable Extension of H.264/AVC", ISO/IEC JTC1/CS29/WG11 MPEG04/M10569/503, vol. XX, XX, March 2004 (2004-03), pages 1-39,

## Beschreibung

Die Erfindung betrifft ein Bildencodierverfahren gemäß dem Oberbegriff des Anspruchs 1 und ein Bilddecodierverfahren gemäß dem Oberbegriff des Anspruchs 8. Ferner betrifft die Erfindung auch eine Encodiervorrichtung bzw. eine Decodier-Vorrichtung gemäß dem Oberbegriff des Anspruchs 10 bzw. 12.

Gemäß [1] nutzen Videocodierverfahren zur effizienten Codierung einer Folge von Bildern spezifische Signaleigenschaften aus. Hierbei werden örtliche und zeitliche Abhängigkeiten der einzelnen Bilder bzw. der Bildpunkte dieser Bilder berücksichtigt. Je besser ein Bild- bzw. Videocodierverfahren in der Lage ist, diese Abhängigkeiten zwischen den einzelnen Bildern bzw. Bildpunkten auszunutzen, umso größer ist im Allgemeinen ein erreichbarer Kompressionsfaktor.

Man unterscheidet bei den heutigen Techniken zur Videocodierung bspw. hybride Codierverfahren, wie z.B. die Standards ITU-T H.263 oder ITU-T H.264 [2,3], und so genannte dreidimensionale Frequenzcodierungsansätze. Obwohl beide Verfahren versuchen, das Videosignal, das aus der Folge von Bildern besteht, sowohl örtlich als auch zeitlich zu codieren, bedient man sich bei hybriden Codierverfahren zunächst einer bewegungskompensierten Prädiktion in zeitlicher Richtung und anschließend einer zweidimensionalen Transformation eines erzeugten Differenzbildes, wie z.B. mit Hilfe einer zweidimensionalen diskreten Cosinus - Transformation (DCT - Discret Cosinus Transformation), um damit eine örtliche Korrelation zwischen benachbarten Bildpunkten innerhalb des Differenzbildes zu entfernen.

Bei den dreidimensionalen Frequenzcodierungsansätzen, wie z.B. der bewegungskompensierten, zeitlich gefilterten Teilbandcodierung, wird im Gegensatz zu dem hybriden Codierverfahren keine zeitliche Prädiktion, sondern eine "echte" Transformation in Richtung der Zeitachse durchgeführt, um somit die zeitliche Korrelation aufeinander folgender Bilder auszunutzen. Bei einer solchen Teilbandcodierung wird die Folge von Bildern vor der örtlichen zweidimensionalen Dekorrelation in mehrere "zeitliche" Frequenzbänder aufgeschlüsselt, wie z.B. bei zwei Frequenzbändern in ein Hoch- und ein Tieffrequenzband für zeitliche hoch- und tieffrequente Bildanteile. Bei der spektralen Zerlegung ist die Verteilung der in diesen Frequenzbändern auftretenden Frequenzen stark von der Größe der im Videosignal auftretenden Bewegung abhängig. Sofern das betrachtete Videosignal keine sich bewegenden oder veränderten Elemente aufweist, sind alle hochfrequenten "Zeitspektralanteile" gleich Null und die gesamte Energie konzentriert sich auf das Tieffrequenzband. Im Normalfall wird jedoch in einer Folge von Bildern stets eine zeitliche Bildänderung zu sehen sein, wie z.B. eine lokale Objektverschiebung, eine Objektgrößenänderung, oder ein Szenenwechsel. Dies führt zu einer Energieverteilung auf mehrere Spektralkoeffizienten, wobei auch hochfrequente Anteile entstehen.

Zur Reduktion der Spektralanteile im zeitlichen Hochfrequenzband und somit zur Konzentration der Energie auf das zeitliche Tieffrequenzband, wird vor der zeitlichen Filterung des Videosignals in mehreren "zeitlichen" Frequenzbändern eine örtliche Bewegungsschätzung und Bewegungskompensation der zeitlich zu filternden Bilder durchgeführt.

Nach [4] kann die bewegungskompensierte, zeitlich gefilterte Teilbandcodierung auch zur Erstellung eines skalierbaren Videodatenstroms eingesetzt werden. Dadurch wird eine zeitliche, eine qualitative oder auch eine örtliche Skalierbarkeit ermöglicht. Ferner wird in [4] Kapitel 3.2.4 eine kombinierte Skalierung vorgestellt. Hierbei werden mit Hilfe des hybriden Codierverfahrens zwei verschiedene Basisqualitäten erzielt. Zur Erreichung von verbesserten Bildqualitäten werden zusätzlich skalierte Videodatenströme hinzugenommen. Diese zusätzlichen skalierten Videodatenströme werden in [4] mit Hilfe einer bewegungskompensierten, zeitlich-gefilterten Teilbandcodierung erzeugt. Somit ist bekannt, dass mit Hilfe eines ersten Codierverfahrens nach einer bewegungskompensierten, prädiktiven Codierung und einem zweiten Codierverfahren nach einer bewegungskompensierten, zeitlich gefilterten Teilbandcodierung ein skalierbarer Videodatenstrom erzeugt werden kann.

Aus der deutschen Anmeldung mit dem amtlichen Aktenzeichen 10 2004 031 407.1 ist ein Verfahren bekannt, bei dem zur Erzeugung eines skalierbaren Videostroms ein hybrides Codierverfahren mit einem dreidimensionalen Frequenzcodierverfahren eingesetzt wird.

Das Dokument US 2002/0071485 A1 offenbart verschiedene Arten von Videocodierverfahren. Unter anderem werden die zeitliche Prädiktion von Videoframes sowie die skalierbare Videocodierung beschrieben.

Die Druckschrift Y. Andreopoulos et al.: "Spatio-Temporal-SNR Scalable Wävelet Coding with Motion-Compensated DCT Base-Layer Architectures", Proceedings, International Conference on Image Processing, Bd. 3, 14. September 2003, Seiten II-795, beschreibt ein Videocodierverfahren, bei dem eine bewegungskompensierte zeitliche Filterung mit einer bewegungskompensierten DCT-Codierung kombiniert wird.

In den Druckschriften M. Mrak et al.: "An overview of basic techniques behind scalable video coding", Electronics in Marine, 2004, Proceedings ELMAR 2004, 46th International Symposium Zadar, Kroatien, 16.-18. Juni 2004, Piscataway, NJ, USA, IEEE, 16. Juni 2004, Seiten 597-602, und H. Schwarz et al.: "Scalable Extension of H.264/AVC", ISO/IEC JTC1/CS29/WG11 MPEG04/M10569/S03, XX, XX, März 2004, Seiten 1 bis 39, werden skalierbare Videocodierverfahren basierend auf bewegungskompensierter zeitlicher Filterung beschrieben.

Die der Erfindung zugrunde liegende Aufgabe ist ein Bildencodierverfahren, ein Bilddecodierverfahren, eine Encodiervorrichtung und eine Decodiervorrichtung anzugeben, welche eine Bildencodierung bzw. Bilddecodierung unter Benutzung eines ersten und zweiten Codierverfahrens in effizienter Weise ermöglicht.

Diese Aufgabe wird durch das Bildencodierverfahren gemäß Anspruch 1 sowie das Bilddecodierverfahren gemäß Anspruch 8 gelöst. Des Weiteren wird die Aufgabe durch die Encodiervorrichtung bzw. die Decodiervorrichtung gemäß Anspruch 10 bzw. 12 gelöst.

Weitere Einzelheiten sowie Vorteile der Erfindung werden anhand der Figuren 1 bis 9 näher erläutert. Im Einzelnen zeigen:
- Figur 1: in schematischer Darstellung eine Encodierung einer Folge von Originalbildern, wobei mit einem ersten Codierverfahren nach einer bewegungskompensierten, prädiktiven Codierung decodierte Bilder erzeugt werden und mit einem zweiten Codierverfahren nach einer bewegungskompensierten, zeitlich gefilterten Teilbandcodierung unter Berücksichtigung der decodierten Bilder des ersten Codierverfahrens zweite Bilder codiert werden;
- Figur 2: eine Abhängigkeit bei der Codierung der zweiten Bilder in Bezug auf die decodierten Bildern;
- Figur 3: die Abhängigkeit bei der Codierung der zweiten Bilder von den decodierten Bildern, wobei jedes zweite Bild von mindestens zwei decodierten Bildern prädiziert wird;
- Figur 4: die Abhängigkeit bei der Codierung der zweiten Bilder von den decodierten Bildern, wobei die decodierten Bilder durch Vergrößerung der Bildgröße aus encodierten Bildern nach dem ersten Codierverfahren erstellt werden;
- Figur 5: in schematischer Darstellung die Abhängigkeit bei der Codierung der zweiten Bilder von den decodierten Bildern, wobei eine Folge von decodierten Bildern eine reduzierte Bildwiederholfrequenz gegenüber einer Folge von zweiten Bildern aufweisen;
- Figur 6: ein mobiles Endgerät, das eine Encodier- und eine Decodiervorrichtung zum Ausführung des erfindungsgemäßen Verfahrens umfasst;
- Figur 7: ein Netzwerk mit einer Netzwerkeinheit, das eine Encodier- und eine Decodiervorrichtung zum Ausführung des erfindungsgemäßen Verfahrens umfasst;
- Figur 8: eine Abhängigkeit bei der Codierung der zweiten Bilder in Bezug auf eine erste Qualitätsstufe eines decodierten Bilds;
- Figur 9: eine Encodier- und einer Decodiervorrichtung, verbunden mit einem Übertragungsnetz, die eine Ausführung des erfindungsgemäßen Verfahrens realisieren.

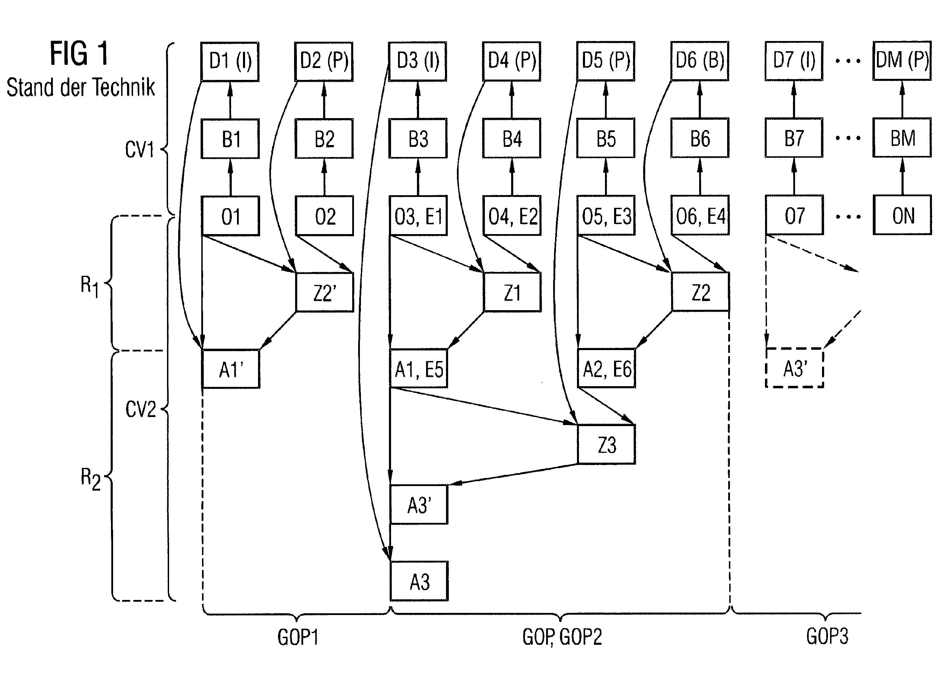

Elemente mit gleicher Funktion und Wirkungsweise sind in den Figuren 1 bis 9 mit denselben Bezugszeichen versehen.

In Fig.1 ist ein Ausführungsbeispiel des erfindungemäßen Verfahrens zu sehen. Hierbei soll eine Folge von Originalbildern O1,...,ON unter Verwendung eines ersten Codierverfahrens CV1 und eines zweiten Codierverfahrens CV2 komprimiert werden. Diese Originalbilder O1, ..., ON wurden beispielsweise von einer Kamera erzeugt und werden im Farbformat mit einer Helligkeitskomponente und zwei Crominanzkomponenten in einer Bildgröße mit 640x480 Bildpunkten bereitgestellt. Ferner können die Originalbilder O1, ..., ON vor deren Encodierung einer Bildvorverarbeitung, wie z.B. einer Rauschunterdrückung oder Kantenschärfung, unterzogen werden.

Zunächst führt das erste Codierverfahren CV1 eine bewegungskompensierte, prädiktive Codierung der Originalbilder O1, ..., ON durch. Aus [5] sind derartige bewegungskompensierte, prädiktive Codierverfahren bekannt, wie bspw. der Standard ITU-T H.263. Hiermit können aus den Originalbildern O1, ..., ON encodierte Bilder B1, ...,BM unter Verwendung bspw. eines INTRA-Codiermodus und/oder INTER-Codiermodus erzeugt werden. Der INTRA-Codiermodus encodiert einzelne Bildblöcke des jeweiligen Originalbildes O1, ..., ON ohne Berücksichtigung anderer Originalbilder O1, ..., ON. Hingegen werden bei dem INTER-Codiermodus einzelne Bildblöcke des jeweiligen Originalbildes O1, ..., ON unter Berücksichtigung eines oder mehrerer bereits encodierter Bilder B1,.... BM bzw. eines oder mehrere decodierte Bilder D1,..., D4 = Referenzbild RB komprimiert. Zusätzlich ist es bei dem INTER-Codiermodus vorteilhaft vor der Codierung eine Bewegungsschätzung des jeweils zu encodierenden Bildblocks des Orignalbildes O1, ...,ON durchzuführen und dann erst nach einer Bewegungskompensation diesen Bildblock zu encodieren. Verfahren zur Bewegungsschätzung bzw. Bewegungskompensation sind aus [5] bekannt. Ferner kann die Anzahl M der encodierten Bilder B1, ..., BM von der Anzahl N der Originalbilder O1, ..., ON abweichen, da beispielsweise nicht alle Originalbilder O1, ..., ON encodiert werden.

In einem nächsten Schritt werden aus den encodierten Bildern B1,..., BM mit Hilfe des ersten Codierverfahrens CV1 eine Folge von decodierten Bildern D1,..., DM erstellt. Ferner kann für jedes decodierte Bild D1, ..., DM eine eigene Decodierliste erstellt werden, die angibt, welche Bildblöcke des jeweiligen decodierten Bildes D1, ..., DM bspw. mit dem INTRA-Codiermodus und welche mit dem INTER-Codiermodus encodiert worden sind. Diese decodierten Bilder D1,..., DM werden in den nachfolgenden Verarbeitungsschritten von dem zweiten Codierverfahren CV2 berücksichtigt. Für das Ausführungsbeispiel nach Fig. 1 wurden diejenigen decodierten Bilder D1,....,DM bei denen alle Bildblöcke mit dem INTRA-Codiermodus generiert wurden mit "I", diejenigen, bei denen mindestens ein Bildblock mit Hilfe des INTER-Codiermodus encodiert wurde mit einem "P", und diejenigen, die mit Hilfe eines bi-direktionalen prädiktiven Codiermodus encodiert wurden mit einem "B markiert.

In einem nachfolgenden Schritt werden alle aufeinander folgenden Originalbildern O1,..., ON einer jeweiligen Bildgruppe GOP mit Hilfe des zweiten Codierverfahrens CV2 encodiert. Im vorliegenden Ausführungsbeispiel sind drei verschiedene Bildgruppen GOP1, GOP2, GOP3 zu sehen. Hierbei ist die Anzahl der zu encodierenden Originalbilder der zweiten Bildgruppe GOP2 zu vier gewählt worden. Die Anzahl zu encodierender Originalbilder pro Bildgruppe GOP kann variieren, z.B. werden zuerst zwei, dann vier und dann acht Originalbilder in der jeweiligen Bildgruppe GOP1, GOP2, GOP3 encodiert. So ist beispielsweise das erste zu encodierende Originalbild der zweiten Bildgruppe GOP2 das dritte Originalbild 03.

Unter decodierten Bildern D1, ..., D4 ist bspw. die vollständige Decodierung des jeweils dazugehörigen encodierten Bildes B1, ..., B4 oder auch eine Extraktion von einem oder mehreren Syntaxelementen aus dem jeweils dazugehörigen encodierten Bild B1, ..., B4, wie z.B. einem Blocktyp bzw. Makroblocktyp oder einem Bewegungsvektor, zu verstehen.

Im Rahmen dieser Erfindung ist unter einer bewegungskompensierten, zeitlich gefilterten Teilbandcodierung ein Codierverfahren zu verstehen, bei dem in mehreren Auflösungsebenen R1, R2 aus jeweils mindestens zwei Eingangsbildern jeweils mindestens ein Ausgangsbild A1', A3 erzeugt wird. Zusätzlich können noch Zwischenbilder Z2', Z1, Z2, Z3 erstellt werden. Das jeweilige Zwischenbild repräsentiert die bewegungskompensierten Anteile der dazugehörigen Eingangsbilder eines ersten Teilbands. Das jeweilige Ausgangsbild umfasst die bewegungskompensierten Anteile der dazugehörigen Eingangsbilder eines zweiten Teilbands. Das erste Teilband umfasst beispielsweise die hochfrequenten und das zweite Teilband die tieffrequenten Anteile. In jeder niedrigeren Auflösungsebene R2 werden die Ausgangsbilder A1, A2 der höheren Auflösungsebene R1 zu den Eingangsbildern E5, E6.

Das in Fig. 1 abgebildete zweite Codierverfahren CV2 besteht innerhalb der zweiten Bildgruppe GOP2 aus zwei Auflösungsebenen R1, R2. In der ersten Auflösungsebene R1 werden aus jeweils zwei Eingangsbildern E1 und E2, E3 und E4 und den zwei dazugehörigen decodierten Bildern D4, D6 jeweils ein Zwischenbild Z1, Z2 und jeweils ein Ausgangsbild A1, A2 erzeugt. Die zwei Ausgangsbilder A1, A2 werden als Eingangsbilder E5, E6 der zweiten Auflösungsebene R2 verwendet. In der zweiten Auflösungsebene R2, die in diesem Ausführungsbeispiel der niedrigen Auflösungsebene entspricht, werden aus den Eingangsbildern E5, E6 zusammen mit den decodierten Bildern D3, D5 ein drittes Zwischenbild Z3 und ein drittes Ausgangsbild A3 erzeugt. In diesem Ausführungsbeispiel repräsentiert die niedrige Auflösungsebene R2 zugleich die niedrigste Auflösungsebene. Unter der niedrigsten Auflösungsebene ist diejenige Auflösungsebene zu verstehen, die innerhalb der Bildgruppe GOP lediglich ein Ausgangsbild generiert. Die Ausgangsbilder A1', A3 der niedrigen Auflösungsebene R2 und die Zwischenbilder Z2', Z1, Z2, Z3 werden als zweite Bilder bezeichnet.

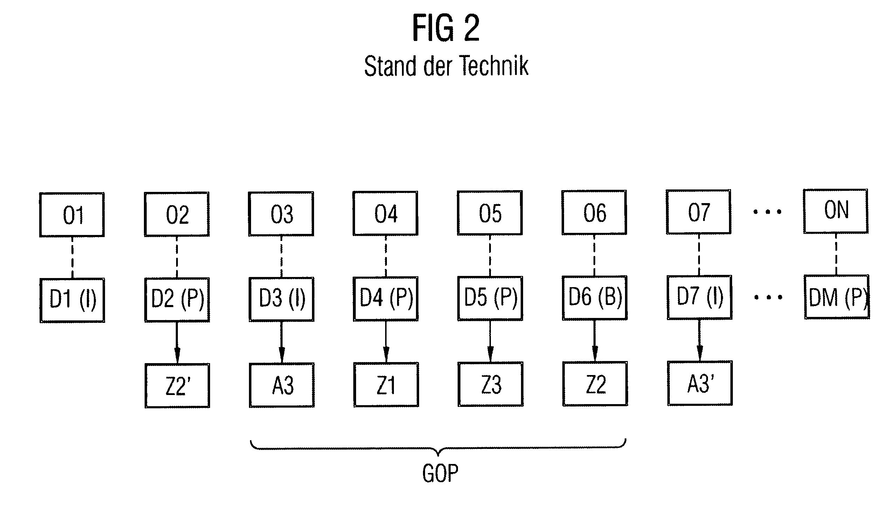

Mit Hilfe von Figur 2 wird eine Abhängigkeit der zweiten Bilder Z1, Z2, Z3, A3 von den decodierten Bildern D3, D4, D5, D6, wie es bereits in Figur 1 näher erläutert wurde, vereinfacht dargestellt. Durch den Pfeil werden dasjenige bzw. diejenigen decodierten Bilder markiert, die bei der Encodierung eines bestimmten zweiten Bildes berücksichtigt werden sollen. So wird beispielsweise bei der Erstellung des zweiten Bildes A3, das dritte decodierte Bild D3 in Betracht gezogen. Hierbei kann das dritte decodierte Bild D3 bswp. bei einer prädiktiven INTRA-Codierung des zweiten Bildes A3 als Referenzbild RB dienen. Die Angabe der Originalbilder O1,..., ON soll in Figur 2 lediglich andeuten, zu welchem Originalbild das jeweilige decodierte Bild bzw. zweite Bild zeitlich gehört. Beispielsweise repräsentieren sowohl das zweite Bild Z3 als auch das decodierte Bild D5 das Originalbild 05.

Die Zuordnung eines mit einem Codiermodus des ersten Codierverfahrens CV1, wie bspw. einem INTRA-Codiermodus, decodierten Bildes D3 bei der Generierung des zweiten Bildes A3 in Figur 1 bzw. 2 stellt lediglich eine der möglichen Ausführungsformen dar. So kann die Generierung des zweiten Bildes A3 mit einem decodierten Bild D3 erfolgen, welches mit einem von dem INTRA-Codiermodus verschiedenen Codiermodus, wie bspw. einem bi-direktionalen prädiktiven Codiermodus, encodiert worden ist.

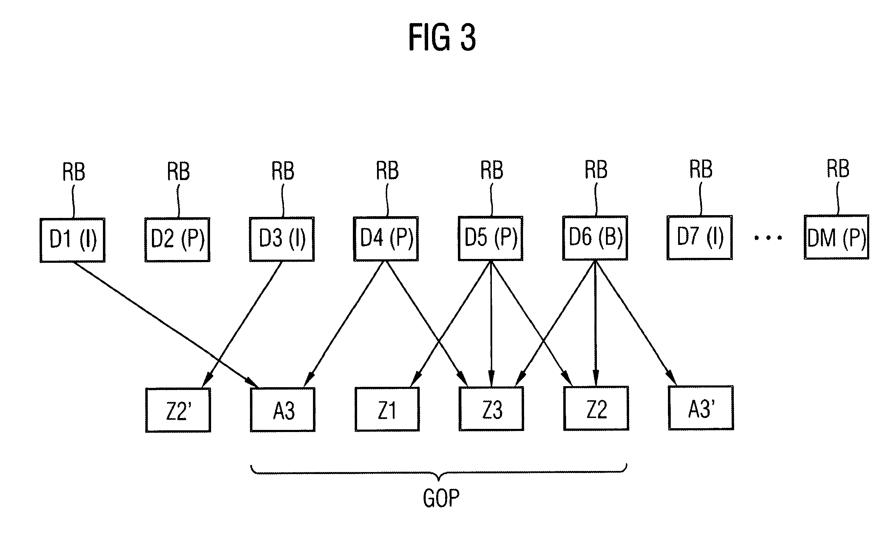

In Figur 3 ist eine Variante des erfindungsgemäßen Bildencodierverfahrens zu sehen. Hierbei ist zu erkennen, dass jedes zweite Bild unter Verwendung von mindestens einem decodierten Bild gemäß dem zweiten Codierverfahren CV2 generiert wird. Dabei ist bei der Erzeugung des zweiten Bildes Z1 das decodierte Bild D5 berücksichtigt worden. Hierbei wird das decodierte Bild D1, ..., DN als Referenzbild RB bezeichnet, da es bspw. bei einer INTER-Codierung mit einer zeitlichen Prädiktion für die Generierung des zweiten Bilds Z3 benutzt wird. Grundsätzlich ist die Anzahl der decodierten Bilder, die zur Erzeugung eines zweiten Bildes herangezogen werden, nicht auf einen vordefinierten Wert, wie beispielsweise 1 oder 3, festgelegt. Auch kann bei der Generierung eines zweiten Bildes die Anzahl der zu berücksichtigenden decodierten Bilder variieren. So werden zur Erzeugung des zweiten Bildes A3 die zwei decodierten Bilder D1 und D4 und zur Erstellung des zweiten Bildes Z3 die drei decodierten Bilder D4, D5 und D6 berücksichtigt. Ferner ist es auch nicht erforderlich, dass lediglich benachbarte decodierte Bilder für die Generierung des zweiten Bildes herangezogen werden. Beispielsweise wird das decodierte Bilder D1 zur Erstellung des zweiten Bildes A3 berücksichtigt. Gemäß der vorliegenden Erfindung wird mindestens ein decodiertes Bild bei der Generierung eines zweiten Bildes in Betracht gezogen, wobei jedoch als Referenzbild RB mindestens ein decodiertes Bild D5 zu verwenden ist, das ein anderes Originalbild 05 repräsentiert wie dasjenige Originalbild 05, das durch das zweite Bild Z1 repräsentiert wird.

Ferner ist es im Rahmen der vorliegenden Erfindung auch nicht erforderlich, dass immer ein ganzes Bild, d.h. alle zuencodierenden Bildbereiche eines Bildes, unter Berücksichtigung des- bzw. derselben Referenzbilder RB encodiert werden. So kann ein erster Bildbereich des zweiten Bilds Z1 mit Hilfe des Referenzbildes RB = D1 und ein zweiter Bildbereich mit Hilfe der Referenzbilder RB = D1, D3 generiert werden. Ein Bildbereich umfasst eine beliebige Anzahl von Bildpunkten, wie bspw. einen Bildblock von 8 x 8 Bildpunkten, und/oder einen Macroblock von bspw. 16 x 16 Bildpunkten und/oder Bildpunkte, die von einer beliebig geformten Bildregion eingeschlossen sind.

Zusätzlich kann es in der Praxis zweckmäßig sein, bei der Erzeugung eines zweiten Bildes dasjenige decodierte Bild zu berücksichtigen, welches dasselbe Originalbild repräsentiert, wie das zu erzeugende zweite Bild. So wird beispielsweise bei der Erstellung des zweiten Bildes Z3 auch das decodierte Bild D5 berücksichtigt. Diese Vorgehensweise kann zweckmäßig sein, weil in dem decodierten Bild D5, welches dasselbe Originalbild 05 repräsentiert wie das zu erstellende zweite Bild Z3 die beste Korrelation für die Prädiktion gefunden und somit eine hohe Kompression erzielt werden kann.

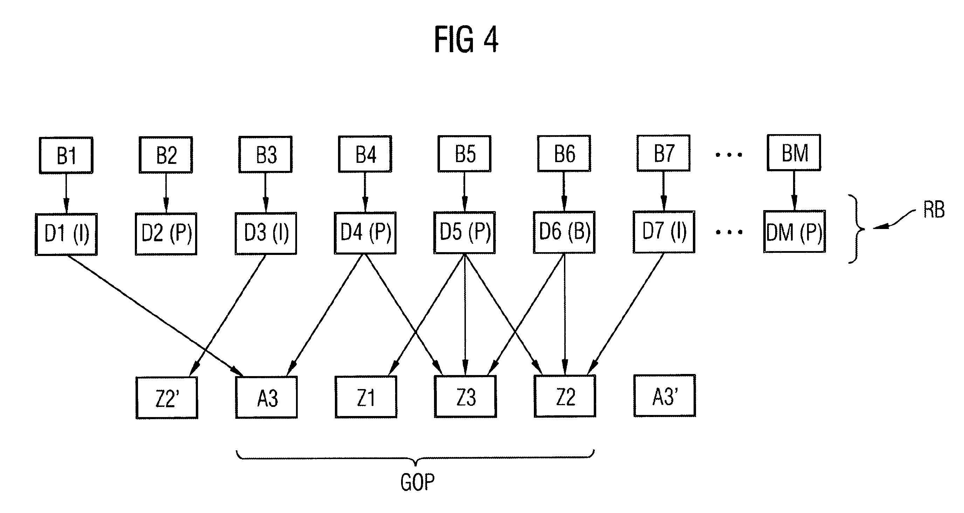

In einer weiteren Variante des erfindungsgemäßen Videoencodierverfahrens wird vor dem Generieren eines der zweiten Bilder Z1, Z2, Z3, A3 mindestens ein Teilbereich eines decodierten Bildes D1,...,DM mit einer ersten Bildgröße BG1 in eine zweite Bildgröße BG2 vergrößert oder verkleinert. Ein solcher Teilbereich beschreibt eine Anzahl an Bildpunkten, wobei der Teilbereich beliebig geformt sein kann. Im folgenden Beispiel umfasst der Teilbereich ein vollständig decodiertes Bild. Zur besseren Darstellung dieser Variante sind in Figur 4 die, zu den decodierten Bildern D1,..., DM dazugehörigen, encodierten Bildern B1,..., BM aufgezeichnet worden. So beträgt eine erste Bildgröße BG1 eines der encodierten Bilder B1,..., BM beispielsweise 100x120 Bildpunkte. Nun kann es vorteilhaft sein, dass zur Erstellung der zweiten Bilder ein oder mehrere decodierte Bilder die zweite Bildgröße BG2 aufweisen sollen. Die zweite Bildgröße BG2 beträgt beispielsweise 200x240 Bildpunkte. Dazu werden die encodierten Bilder B1,...,BM zunächst decodiert und anschließend mit Hilfe eines Skalierungsmittels von der ersten Bildgröße BG1 in die zweite Bildgröße BG2 vergrößert. Diese vergrößerten decodierten Bilder sind die decodierten Bilder D1,...,DM. In einem anderen Ausführungsbeispiel ist es zweckmäßig vor dem Generieren eines der zweiten Bilder eine Verkleinerung mindestens eines Teilbereichs eines der decodierten Bilder durchzuführen. Ferner kann es in der Praxis auch zweckmäßig sein, für einen Teilbereich der encodierten Bilder B1,...,B4 eine Verkleinerung nach deren Decodierung und für die restlichen encodierten Bilder B5,...,BM nach deren Decodierung eine Vergrößerung mindestens eines Teilbereichs durchzuführen (dies ist grafisch nicht dargestellt).

In einer weiteren Ausführungsform kann es vorteilhaft sein, dass mindestens ein decodiertes Bild D1,..., DM mit Hilfe des ersten Codierverfahrens CV1 mittels des INTRA-Codiermodus oder des INTER-Codiermodus und/oder eines bi-direktionalen prädiktiven Codiermodus erzeugt wird. Bei dem bi-direktionalen prädiktiven Codiermodus wird ein decodiertes Bild bzw. ein encodiertes Bild durch Prädiktion von zwei oder mehreren decodierten Bildern erstellt. Mit Hilfe des bi-direktionalen prädiktiven Codiermodus kann die Anzahl der decodierten Bilder gegenüber der Anzahl der Originalbilder erhöht werden. Somit können zur Generierung von zweiten Bildern auch decodierte Bilder, die mittels des bi-direktionalen prädiktiven Codiermodus erstellt wurden, in Betracht gezogen werden. Dies kann zu einer Verbesserung der Kompressionsrate führen. Ferner können auch hierarchische B-Bilder bei der Generierung von mindestens einem zweiten Bild verwendet werden. Hierarchische B-Bilder werden jeweils mittels zweier B-Bilder erstellt.

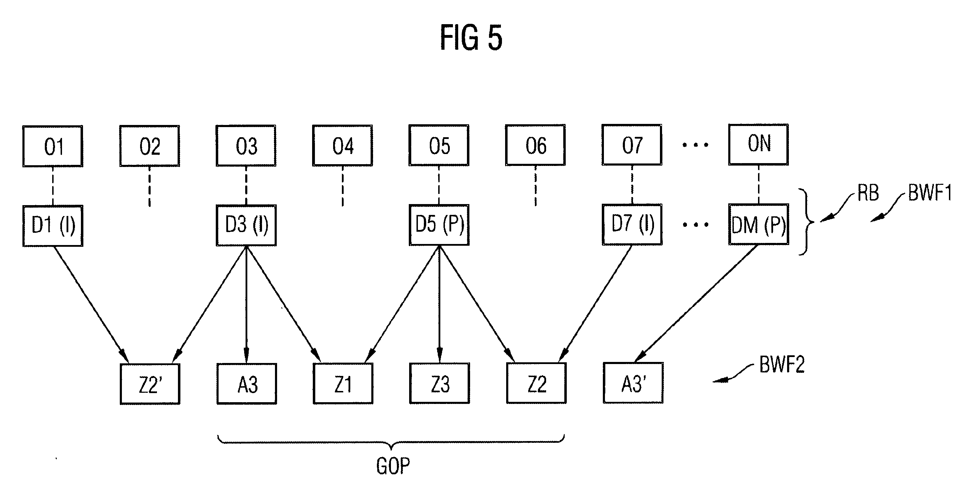

Ferner kann es in der Praxis zweckmäßig sein, dass durch das erste Codierverfahren CV1 die Folge der decodierten Bilder D1,...,DM mit einer ersten Bildwiederholfrequenz BWF1 und durch das zweite Codierverfahren CV2 die Folge von zweiten Bildern Z1, Z2, Z3, A3 mit einer zweiten Bildwiederholfrequenz BWF2 erzeugt werden. Dies wird anhand von Figur 5 näher erläutert. In Figur 5 wurde die Folge der decodierten Bilder lediglich für jedes zweite Originalbild erzeugt. Somit ist für das Originalbild 02, 04, 06 kein dazugehöriges decodiertes Bild vorhanden. Zur Generierung der zweiten Bilder wird lediglich auf die vorhandenen decodierten Bilder zurückgegriffen. Somit werden beispielsweise zur Erstellung des zweiten Bildes Z2 die decodierten Bilder D7, D5 berücksichtigt. Nach Erzeugung aller zweiten Bilder zeigt sich gemäß Figur 5, dass die zweite Bildwiederholfrequenz BWF2 doppelt so groß ist wie die erste Bildwiederholfrequenz BWF1, da doppelt so viele zweite Bilder wie decodierte Bilder erzeugt worden sind.

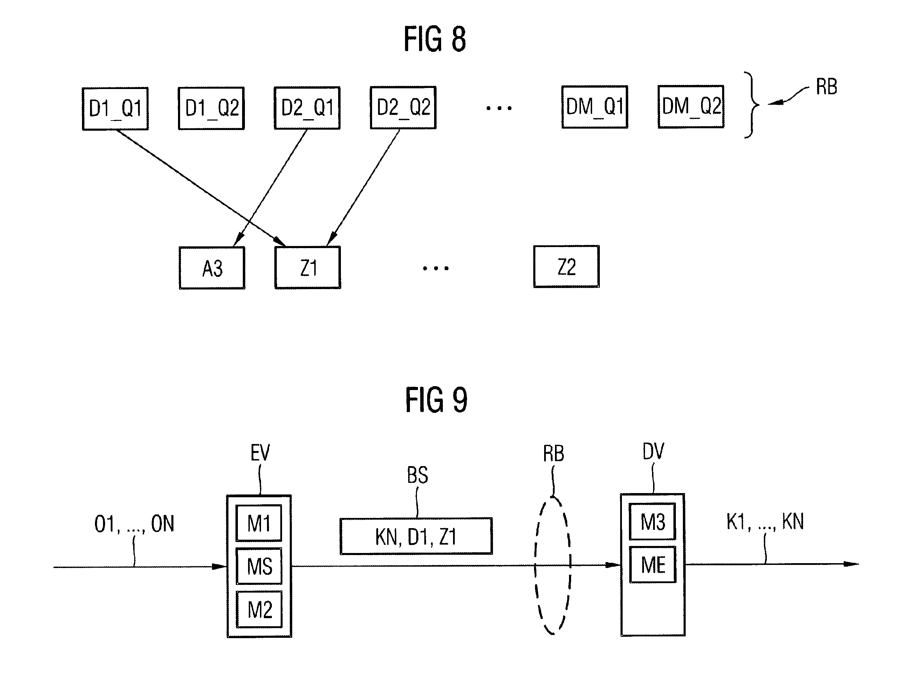

In einer weiteren Variante des erfindungsgemäßen Bildencodierverfahrens gemäß Figur 8 kann durch das erste Codierverfahren CV1 die Folge der decodierten Bilder D1_Q1, D1_Q2, ...,DM_Q1, DM_Q2 in mehreren ersten Bildqualitätsstufen Q1, Q2 und durch das zweite Codierverfahren CV2 die Folge der zweiten Bilder Z1, Z2, Z3, A3 in mehreren zweiten Bildqualitätsstufen Q1', Q2' erzeugt werden, wobei zum Generieren der Folge von zweiten Bildern Z1, Z2, Z3, A3 die Folge der decodierten Bilder D1_Q1, D1, Q2, ..., DM_Q1, DM_Q2, insbesondere mit der höchsten ersten Bildqualitätsstufe Q2, berücksichtigt wird. Beispielsweise werden für jedes decodierte Bild D1,..., DM zwei verschiedene erste Qualitätsstufen, bspw. D1_Q1, D1_Q2 angeboten. So könnte das decodierte Bild D1_Q1 über eine erste Qualitätsstufe = Basisqualitätsstufe und über eine zweite gegenüber der Basisqualitätsstufe verbesserte Qualitätsstufe in Form des decodierten Bildes D1_Q2 verfügen. Somit beträgt eine Anzahl an ersten Bildqualitätsstufen gleich zwei. Ferner kann sich die Anzahl der Qualitätsstufen pro decodiertem Bild D1_Q1,..., DM_Q2 unterscheiden. In einer vorteilhaften Variante wird zur Erstellung der zweiten Bilder A3, Z1, Z2, Z3 nun diejenige Qualitätsstufe der decodierten Bilder berücksichtigt, die der höchsten ersten Bildqualitätsstufe entspricht, also bspw. das decodierte Bild D1_Q2 für die höchste erste Bildqualitätsstufe Q2. Ferner können auch die zweiten Bilder Z1, Z2, Z3, A3 über mehrere Qualitätsstufen verfügen, beispielsweise über drei Qualitätsstufen Q1', Q2', Q3'. Hierbei ist eine Anzahl an zweiten Bildqualitätsstufen gleich drei.

Die vorliegende Erfindung kann für das erste und zweite Codierverfahren CV1, CV2 sowohl ein einziges Codierverfahren als auch zwei unterschiedliche Codierverfahren benutzen. Ferner ist die vorliegende Erfindung nicht nur auf die Verwendung von lediglich zwei Codierverfahren, also dem ersten und zweiten Codierverfahren, beschränkt, sondern kann auch für drei und mehr Codierverfahren eingesetzt werden. Beispielsweise werden Originalbilder mit einem ersten und zweiten Codierverfahren encodiert und ein drittes Codierverfahren benutzt diese encodierten bzw. decodierten Bilder des ersten und/oder zweiten Codierverfahrens zur Generierung der zweiten Bilder.

Das Bildencodierverfahren kann mit einer Encodiervorrichtung EV ausgeführt werden. Das Bildencodierverfahren wird mit Hilfe eines ersten und zweiten Mittels M1, M2 der Encodiervorrichtung EV realisiert. Zusätzlich kann die Encodiervorrichtung ein Sendemittel MS umfassen. Hiermit wird ein Bitstrom BS, der von der Encodiervorrichtung EV erzeugt wird und mindestens eine Kennzeichnung KN, ein decodiertes Bild D1 und mindestens ein zweites Bild Z1 umfasst, über ein Übertragungsnetz UE an eine Decodiervorrichtung DV verschickt.

Die Erfindung betrifft auch ein Bilddecodierverfahren, welches ein oder mehrere Schritte zum Decodieren mindestens eines gemäß dem Bildencodierverfahren codierten Bildes, insbesondere eines der zweiten Bilder Z1, Z2, Z3, A3 durchführt. Mit Hilfe des erfindungsgemäßen Bilddecodierverfahrens können ein oder mehrere rekonstruierte Originalbilder K1, ..., KN aus den zweiten Bildern wiedergewonnen werden, wobei die rekonstruierten Originalbilder K1, ..., KN eines oder mehrere der Originalbilder O1, ..., ON repräsentieren. Bei der Durchführung des Bilddecodierverfahrens werden diejenigen decodierten Bilder D1, ..., DN als Referenzbilder RB berücksichtigt, die bei der Generierung der zweiten Bilder verwendet wurden. Das Bildencodierverfahren kann mit einer Decodiervorrichtung DV ausgeführt werden. Ferner kann die Decodiereinheit ein Empfangsmodul ME zum Empfangen des Bitstroms BS beinhalten, die mindestens eine Kennzeichnung KN, ein decodiertes Bild D1 und mindestens ein zweites Bild Z1 umfasst. Das Bilddecodierverfahren kann mit Hilfe einer Decodiervorrichtung DV, umfassend ein drittes Mittel zum Durchführen des erfindungsgemäßen Verfahrens, realisiert werden.

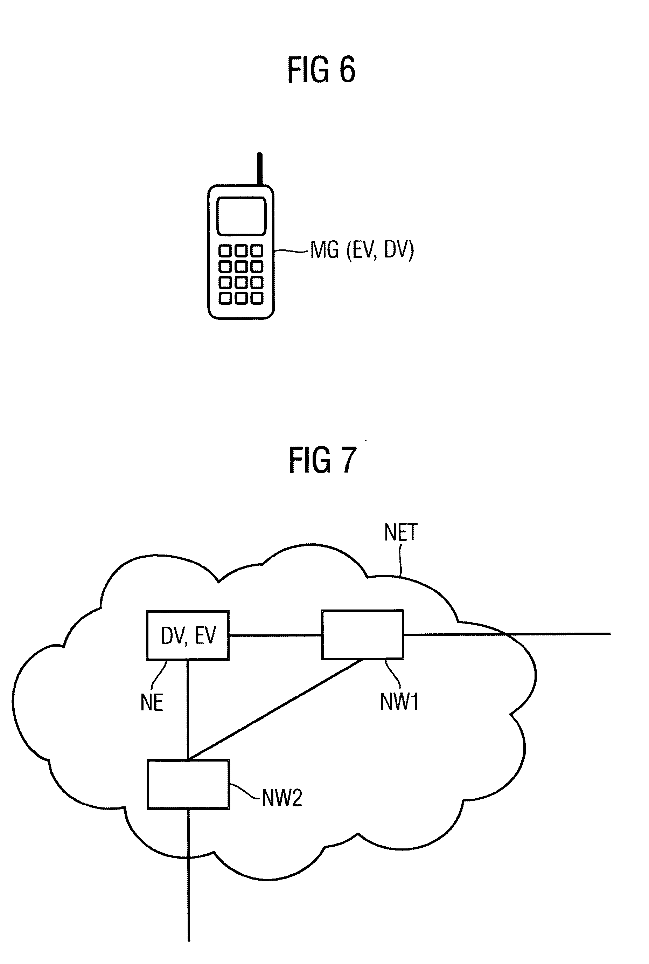

In Figur 6 ist ein mobiles Endgerät MG zu sehen. Die Encodiervorrichtung EV und/oder die Decodiervorrichtung DV können in dem Endgerät MG implementiert werden und das erfindungsgemäße Bildencodierverfahren bzw. Bilddecodierverfahren realisieren. Das mobile Endgerät MG ist insbesondere ein Mobilfunkgerät nach GSM-Standard (GSM - Global System for Mobile Communication).

In Figur 7 ist ein Netzwerk NET abgebildet. Dieses Netzwerk NET umfasst eine Netzwerkeinheit NE, die beispielsweise die Encodiervorrichtung EV und/oder die Decodiervorrichtung DV realisiert. Ferner können innerhalb des Netzwerks NET zusätzlich ein erstes und zweites Netzwerkelement NW1, NW2 vorhanden sein, die beispielsweise miteinander und/oder mit der Netzwerkeinheit NE verbunden sind. Die Netzwerkeinheit NE, welche die Encodiervorrichtung EV und/oder die Decodiervorrichtung DV umfasst, kann mit Hilfe dieser Vorrichtungen das erfindungsgemäße Bildencodierverfahren bzw. Bilddecodierverfahren durchführen.

In Figur 9 ist sowohl die Encodiereinheit EV, umfassend das erste und zweite Mittel M1, M2 und das Sendemittel MS zum Generieren eines Bitstroms BS, umfassend mindestens eine Kennzeichnung KN, ein decodiertes Bild D1 und mindestens ein zweites Bild Z1, als auch eine Decodiereinheit DV, umfassend das dritte Mittel M3 und ein Empfangsmittel ME, zum Empfangen des Bitstroms BS abgedruckt. Die Encodiervorrichtung EV und die Decodiervorrichtung DV sind über das Übertragungsnetz UE zum Austausch von Nutzdaten und Kontrolldaten miteinander verbunden. Das Übertragungsnetz UE ist bspw. nach dem GSM-Standard oder dem ISDN-Standard (ISDN - Integrated Subscriber Digital Network) ausgebildet.

### Literaturverzeichnis

[1] K. Hanke, RWTH-Aachen, http:/www.ient.rwth-aachen.de/ forschung/pdf/3D-videocodierung.pdf
[2] Videocodierstandard ITU-T H.263, "Videocoding for Low Bitrate Communication", 02/1998
[3] Videocodierstandard ITU-T H.264, "Advanced Video Coding for Generic Audio Visual Services", 05/2003
[4] H.Schwarz, D.Marpe und T.Wigand, Fraunhofer Institut für Telekommunikation, Heinrich Herz Institut, "Scalable Extension of H.264/AVC", ISO/IEC JTC1/SC29/WG11, MPEG04/M10569/S03, März 2004.
[5] S.Jun, S. Huifang, "Image and Video Compression for Multimedia Engineering", CRC-Press, 2000

## Patentansprüche

1. Bildencodierverfahren, mit folgenden Schritten:
a) aus einer Folge von Originalbildern (O1, ..., ON) wird mit Hilfe eines ersten Codierverfahrens (CV1), welches eine bewegungskompensierte, prädiktive Codierung ist, eine Folge von encodierten Bildern (B1, ..., BM) erzeugt, aus denen anschließend decodierte Bilder (D1, ..., DM) erstellt werden,
b) aus einer Bildgruppe (GOP) der Folge von Originalbildern (O1, ..., ON) wird mit Hilfe eines zweiten Codierverfahrens (CV2), welches eine bewegungskompensierte, zeitlich gefilterte Teilbandcodierung ist, eine Folge von zweiten Bildern (Z1, Z2, Z3, A3) generiert, wobei
- zumindest ein Bildbereich eines der zweiten Bilder (Z1) mit Hilfe eines INTER-Codiermodus des zweiten Codierverfahrens (CV2) encodiert wird, **dadurch gekennzeichnet, dass**
- durch den INTER-Codiermodus als Referenzbild (RB) mindestens eines der decodierten Bilder (D5) verwendet wird, und
- durch das als Referenzbild (RB) verwendete decodierte Bild (D5) ein anderes Originalbild (O5) repräsentiert wird, als dasjenige Originalbild (04), das durch das zweite Bild (Z1) des zu encodierenden Bildbereichs repräsentiert wird.

2. Bildencodierverfahren nach Anspruch 1,
**dadurch gekennzeichnet, dass**
zum Encodieren eines der zweiten Bilder (Z3) mindestens zwei decodierte Bilder (D4, D5) berücksichtigt werden, wobei zusätzlich dasjenige decodierte Bild (D5) als Referenzbild (RB) einbezogen wird, welches dasselbe Originalbild (O5) wie das zu generierende zweite Bild (Z3) repräsentiert.

3. Bildencodierverfahren nach einem der vorhergehenden Ansprüche,
**dadurch gekennzeichnet, dass**
vor dem Encodieren mindestens eines Bildbereichs eines der zweiten Bilder (Z1, Z2, Z3, A3) mindestens ein Teilbereich eines decodierten Bildes (D1, ..., DM) mit einer ersten Bildgröße (BG1) in eine zweite Bildgröße (BG2) vergrößert oder verkleinert wird.

4. Bildencodierverfahren nach einem der vorhergehenden Ansprüche,
**dadurch gekennzeichnet, dass**
mindestens ein decodiertes Bild (D1, ..., DM) mit Hilfe des ersten Codierverfahrens (CV1) mittels eines INTRA-Codiermodus und/oder eines INTER-Codiermodus und/oder eines bidirektionalen prädiktiven Codiermodus erzeugt wird.

5. Bildencodierverfahren nach einem der vorhergehenden Ansprüche,
**dadurch gekennzeichnet, dass**
durch das erste Codierverfahren (CV1) die Folge der decodierten Bilder (D1, ..., DM) mit einer ersten Bildwiederholfrequenz (BWF1) und durch das zweite Codierverfahren (CV2) die Folge von zweiten Bildern (Z1, Z2, Z3, A3) mit einer zweiten Bildwiederholfrequenz (BWF2) erzeugt werden.

6. Bildencodierverfahren nach einem der vorhergehenden Ansprüche,
**dadurch gekennzeichnet, dass**
durch das erste Codierverfahren (CV1) die Folge der decodierten Bilder (D1_Q1, D1_Q2, ..., DM_Q1, DM_Q2) in mehreren ersten Bildqualitätsstufen (Q1, Q2) und durch das zweite Codierverfahren (CV2) die Folge der zweiten Bilder (Z1, Z2, Z3, A3) in mehreren zweiten Bildqualitätsstufen erzeugt werden, wobei zum Generieren der Folge von zweiten Bildern (Z1, Z2, Z3, A3) die Folge der decodierten Bilder (D1_Q1, D1_Q2, ..., DM_Q1, DM_Q2) mit einer und insbesondere der höchsten ersten Bildqualitätsstufe (Q2) berücksichtigt wird.

7. Bildencodierverfahren nach einem der vorhergehenden Ansprüche,
**dadurch gekennzeichnet, dass**
im Rahmen des Bildencodierverfahrens ein Bitstrom (BS) derart erzeugt wird, dass er mindestens eine Kennzeichnung (KN) umfasst, die die Verwendung mindestens eines decodierten Bildes (D1, D1_Q1, D1_Q2) bei der Generierung mindestens eines zweiten Bilds (Z1, A3) anzeigt.

8. Bilddecodierverfahren, **gekennzeichnet durch** Schritte zum Decodieren mindestens eines gemäß dem Bildencodierverfahren nach einem der vorhergehenden Ansprüche encodierten Bildes, insbesondere eines der zweiten Bilder (Z1, Z2, Z3, A3), wobei eine Folge von rekonstruierten Originalbildern (K1, ..., KN) mit Hilfe eines zweiten Decodierverfahrens (DV2), welches eine Decodierung einer bewegungskompensierten, zeitlich gefilterten Teilbandcodierung ist, aus einer Folge von zweiten Bildern (Z1, Z2, Z3, A3) generiert wird, wobei
- zumindest ein Bildbereich eines der zweiten Bilder (Z1) mit Hilfe eines INTER-Decodiermodus des zweiten Decodierverfahrens (DV2) decodiert wird, **dadurch** gekennzeichnet, dass
- **durch** den INTER-Decodiermodus als Referenzbild (RB) mindestens eines der **durch** ein erstes Codierverfahren (CV1) generierten und anschließend decodierten Bilder (D5) verwendet wird, wobei das erste Codierverfahren eine bewegungskompensierte, prädiktive Codierung ist, und
- **durch** das als Referenzbild (RB) verwendete decodierte Bild (D5) ein anderes Originalbild (O5) repräsentiert wird, als dasjenige Originalbild (04), das **durch** das zweite Bild (Z1) des zu decodierenden Bildbereichs repräsentiert wird.

9. Bilddecodierverfahren nach, Anspruch 8 **dadurch gekennzeichnet, dass**
im Rahmen des Bilddecodierverfahrens ein Bitstrom (BS) decodiert wird, wobei er mindestens eine Kennzeichnung (KN) umfasst, die die Verwendung mindestens eines decodierten Bildes (D1, D1_Q1, D1_Q2) bei der Generierung mindestens eines zweiten Bilds (Z1, A3) anzeigt.

10. Encodiervorrichtung (EV), mit Mitteln zum Durchführen eines Bildencodierverfahrens insbesondere nach einem der Ansprüche 1 bis 7, mit
a) einem ersten Mittel (M1) zum Erzeugen einer Folge von decodierten Bildern (D1, ..., DM) aus einer Folge von Originalbildern (O1, ..., ON), indem aus der Folge von Originalbildern (O1, ..., ON) mit Hilfe eines ersten Codierverfahrens (CV1), welches eine bewegungskompensierte, prädiktive Codierung ist, eine Folge von encodierten Bildern (B1, ..., BM) erzeugt wird, aus denen anschließend die decodierten Bilder (D1, ..., DM) erstellt werden,
b) einem zweiten Mittel (M2) zum Generieren einer Folge von zweiten Bildern (Z1, Z2, Z3, A3) aus einer Bildgruppe (GOP) der Folge von Originalbildern (O1, ..., ON) mit Hilfe eines zweiten Codierverfahrens (CV2), welches eine bewegungskompensierte, zeitlich gefilterte Teilbandcodierung ist, wobei
- zumindest ein Bildbereich eines der zweiten Bilder (Z1) mit Hilfe eines INTER-Codiermodus des zweiten Codierverfahrens (CV2) encodiert wird, **dadurch gekennzeichnet, dass**
- durch den INTER-Codiermodus als Referenzbild (RB) mindestens eines der decodierten Bilder (D5) verwendet wird, und
- durch das als Referenzbild (RB) verwendete decodierte Bild (D5) ein anderes Originalbild (O5) repräsentiert wird, als dasjenige Originalbild (04), das durch das zweite Bild (Z1) des zu encodierenden Bildbereichs repräsentiert wird.

11. Encodiervorrichtung (EV) nach Anspruch 10,
**gekennzeichnet durch**,
ein Sendemittel (MS) zum Senden eines Bitstroms (BS), der derart erzeugt wird, dass er mindestens eine Kennzeichnung (KN) umfasst, die die Verwendung mindestens eines decodierten Bildes (D1, D1_Q1, D1_Q2) bei der Generierung mindestens eines zweiten Bilds (Z1, A3) anzeigt.

12. Decodiervorrichtung (DV), mit Mitteln zum Durchführen eines Bilddecodierverfahrens insbesondere nach Anspruch 8 oder 9, mit
einem dritten Mittel (M3) zum Generieren einer Folge von rekonstruierten Originalbildern (K1, ..., KN) mit Hilfe eines zweiten Decodierverfahrens (DV2), welches eine Decodierung einer bewegungskompensierten, zeitlich gefilterten Teilbandcodierung ist, aus einer Folge von zweiten Bildern (Z1, Z2, Z3, A3), wobei
- zumindest ein Bildbereich eines der zweiten Bilder (Z1) mit Hilfe eines INTER-Decodiermodus des zweiten Codierverfahrens (DV2) decodiert wird, **dadurch gekennzeichnet, dass**
- durch den INTER-Decodiermodus als Referenzbild (RB) mindestens eines der durch ein erstes Codierverfahren (CV1) generierten und anschließend decodierten Bilder (D5) verwendet wird, wobei das erste Codierverfahren eine bewegungskompensierte, prädiktive Codierung ist, und
- durch das als Referenzbild (RB) verwendete decodierte Bild (D5) ein anderes Originalbild (O5) repräsentiert wird, als dasjenige Originalbild (04), das durch das zweite Bild (Z1) des zu decodierenden Bildbereichs repräsentiert wird.

13. Decodiervorrichtung (DV) nach Anspruch 12,
**gekennzeichnet durch**,
ein Empfangsmittel (ME) zum Empfangen eines Bitstroms (BS), der mindestens eine Kennzeichnung (KN) umfasst, die die Verwendung mindestens eines decodierten Bildes (D1, D1_Q1, D1_Q2) bei der Generierung mindestens eines zweiten Bilds (Z1, A3) anzeigt.

## Claims

1. Image encoding method with the following steps:
a) A succession of encoded images (B1, ..., BM) is created from a succession of original images (01, ..., ON) with the aid of a first encoding method (CV1), which is a movement-compensated, predictive encoding, from which decoded images (D1, ..., DM) are subsequently created,
b) A succession of second images (Z1, Z2, Z3, A3) is generated from an image group (GOP) of the succession of original images (01, ..., ON) which is a movement-compensated, time-filtered subband encoding with the aid of a second encoding method (CV2), wherein
- at least one image area of one of the second images (Z1) is encoded with the aid of an INTER encoding mode of the second encoding method (CV2), **characterised in that**
- at least one of the decoded images (D5) is used by the INTER encoding mode as a reference image (RB), and
- an original image (O5) that is different from the original image (O4) represented by the second image (Z1) of the image area to be encoded is represented by the decoded image (D5) used as a reference image (RB).

2. Image encoding method according to claim 1,
**characterised in that**,
to encode one of the second images (Z3) at least two decoded images (D4, D5) are taken into account, wherein that encoded image (D5) is additionally included as reference image (RB) which represents the same original image (O5) as the second image (Z3) to be generated.

3. Image encoding method according to one of the preceding claims,
**characterised in that**,
before the encoding of at least one image area of one of the second images (Z1, Z2, Z3, A3) at least one part area of a decoded image (D1, ..., DM) with a first image size (BG1) is enlarged or reduced into a second image size (BG2).

4. Image encoding method according to one of the preceding claims,
**characterised in that**,
at least one decoded image (D1, ..., DM) is created with the aid of the first encoding method (CV1) by means of an INTRA encoding mode and/or an INTER encoding mode and/or of a bidirectional predictive encoding mode.

5. Image encoding method according to one of the preceding claims,
**characterised in that**,
the succession of the decoded images (D1, ..., DM) is created with a first image refresh frequency (BWF1) by the first encoding method (CV1) and the succession of second images (Z1, Z2, Z3, A3) is created with a second image refresh frequency (BWF2) by the second encoding method (CV2).

6. Image encoding method according to one of the preceding claims,
**characterised in that**,
the succession of decoded images
(D1_Q1, D1_Q2, ..., DM_Q1, DM_Q2) is created at a number of first image quality levels (Q1, Q2) by the first encoding method (CV1) and the succession of second images (Z1, Z2, Z3, A3) is created at a number of second image quality levels by the second encoding method (CV2), wherein for generating the succession of second images (Z1, Z2, Z3, A3), the succession of the decoded images (D1_Q1, D1_Q2, ..., DM_Q1, DM_Q2) with a and especially the highest first image quality level (Q2) is taken into account.

7. Image encoding method according to one of the preceding claims,
**characterised in that**,
a bit stream (BS) is created within the framework of the image encoding method such that it includes at least one identifier (KN) which indicates the use of at least one decoded image (D1, D1 Q1, D1 Q2) in the generation of at least one second image (Z1, A3).

8. Image decoding method, **characterised by** steps for decoding at least one image encoded in accordance with the image encoding method according to one of the preceding claims, especially one of the second images (Z1, Z2, Z3, A3), wherein a succession of reconstructed original images (K1, ..., KN) is generated with the aid of a second decoding method (DV2) which is a decoding of a movement-compensated, temporally-filtered subband encoding, from a succession of second images (Z1, Z2, Z3, A3), wherein
- at least one image area of one of the second images (Z1) is decoded with the aid of an INTER decoding mode of the second decoding method (DV2), **characterised in that**
- at least one of the images (D5) generated by a first encoding method (CV1) and subsequently decoded is used by the INTER decoding mode as a reference image (RB), wherein the first encoding method is a movement-compensated, predictive encoding, and
- an original image (O5) that is different from the original image (O4) represented by the second image (Z1) of the image area to be decoded is represented by the decoded image (D5) used as a reference image (RB).

9. Image decoding method according to claim 8,
**characterised in that,**
a bit stream (BS) is decoded within the framework of the image decoding method, with said bit stream including at least one identifier (KN) which indicates the use of at least one decoded image (D1, D1_Q1, D1_Q2) in the generation of at least one second image (Z1, A3).

10. Encoding device (EV) with means to execute an image encoding method, especially according to one of the claims 1 to 7, with
a) a first means (M1) for creating a succession of decoded images (D1, ..., DM) from a succession of original images (01, ..., ON), by a succession of encoded images (B1, ..., BM), from which the decoded images (D1, ..., DM) are then created, being generated from the succession of original images (01, ..., ON) with the aid of a first encoding method (CV1),
b) a second means (M2) for generating a succession of second images (Z1, Z2, Z3, A3) from an image group (GOP) of the succession of original images (01, ..., ON) with the aid of a second encoding method (CV2), which is a movement-compensated, time-filtered subband encoding, wherein
- at least one image area of one of the second images (Z1) is encoded with the aid of an INTER encoding mode of the second encoding method (CV2), **characterised in that**
- at least one of the decoded images (D5) is used by the INTER encoding mode as a reference image (RB), and
- an original image (O5) that is different from the original image (O4) represented by the second image (Z1) of the image area to be encoded is represented by the decoded image (D5) used as a reference image (RB).

11. Encoding device (EV) according to claim 10,
**characterised by**,
a transmission means (MS) for transmitting a bit stream (BS), which is created such that it includes at least one identifier (KN) which indicates the use of at least one decoded image (D1, D1_Q1, D1_Q2) in the generation of at least one second image (Z1, A3).

12. Decoding device (DV), with means to execute an image decoding method, especially according to claim 8 or 9, with a third means (M3) for generating a succession of reconstructed original images (K1, ..., KN) with the aid of a second decoding method (DV2), which is a decoding of a movement-compensated, time-filtered subband encoding, from a succession of second images (Z1, Z2, Z3, A3), wherein
- at least one image area of one of the second images (Z1) is decoded with the aid of an INTER decoding mode of the second decoding method (DV2), **characterised in that**
- at least one of the images (D5) generated by a first encoding method (CV1) and then decoded is used by the INTER decoding mode as a reference image (RB), wherein the first encoding method is a movement-compensated, predictive encoding, and
- an original image (O5) that is different from the original image (O4) represented by the second image (Z1) of the image area to be decoded is represented by the decoded image (D5) used as a reference image (RB).

13. Decoding device (DV) according to claim 12
**characterised by**
a receive means (ME) for receiving a bit stream (BS) that includes at least one identifier (KN) which indicates the use of at least one decoded image (D1, D1_Q1, D1_Q2) in the generation of at least one second image (Z1, A3).

## Revendications

1. Procédé de codage d'images, comportant les étapes suivantes :
a) à partir d'une suite d'images originales (01, ..., ON) est générée à l'aide d'un premier procédé de codage (CV1), qui est un codage prédictif à compensation de mouvement, une suite d' images codées (B1, ..., BM), à partir desquelles sont ensuite obtenues des images décodées (D1, ..., DM),
b) à partir d'un groupe d'images (GOP) de la suite d'images originales (01, ..., ON) est générée à l'aide d'un deuxième procédé de codage (CV2), qui est un codage en sous-bandes à filtrage temporel et compensation de mouvement, une suite de deuxièmes images (Z1, Z2, Z3, A3),
- au moins une zone d'image d'une des deuxièmes images (Z1) étant codée à l'aide d'un mode de codage INTER du deuxième procédé de codage (CV2), **caractérisé en ce qu'**
- au moins une des images décodées (D5) est utilisée en tant qu'image de référence (RB) par le biais du mode de codage INTER, et
- une autre image originale (O5) est représentée par le biais de l'image décodée (D5) utilisée en tant qu'image de référence (RB), différente de l'image originale (O4) qui est représentée par le biais de la deuxième image (Z1) de la zone d'image à coder.

2. Procédé de codage d'images selon la revendication 1,
**caractérisé en ce que**
pour coder une des deuxièmes images (Z3) au moins deux images décodées (D4, D5) sont prises en compte, l'image décodée (D5) étant en plus incluse en tant qu'image de référence (RB), qui représente la même image originale (O5) que la deuxième image (Z3) à générer.

3. Procédé de codage d'images selon l'une des revendications précédentes,
**caractérisé en ce qu'**
avant le codage d'au moins une des zones d'image d'une des deuxièmes images (Z1, Z2, Z3, A3) au moins une zone partielle d'une image décodée (D1, ..., DM) ayant une première taille d'image (BG1) est agrandie ou réduite en une deuxième taille d'image (BG2).

4. Procédé de codage d'images selon l'une des revendications précédentes,
**caractérisé en ce qu'**
au moins une image décodée (D1, ..., DM) est générée à l'aide du premier procédé de codage (CV1) au moyen d'un mode de codage INTRA et/ou d'un mode de codage INTER et/ou d'un mode de codage prédictif bidirectionnel.

5. Procédé de codage d'images selon l'une des revendications précédentes,
**caractérisé en ce que**
par le biais du premier procédé de codage (CV1) la suite des images décodées (D1, ..., DM) est générée avec une première fréquence de répétition d'images (BWF1) et par le biais du deuxième procédé de codage (CV2) la suite de deuxièmes images (Z1, Z2, Z3, A3) est générée avec une deuxième fréquence de répétition d'images (BWF2).

6. Procédé de codage d'images selon l'une des revendications précédentes,
**caractérisé en ce que**
par le biais du premier procédé de codage (CV1) la suite des images décodées (D1_Q1, D1_Q2, ..., DM_Q1, DM_Q2) est générée lors de plusieurs premières étapes de qualité d'images (Q1, Q2) et par le biais du deuxième procédé de codage (CV2) la suite des deuxièmes images (Z1, Z2, Z3, A3) est générée lors de plusieurs deuxièmes étapes de qualité d'images (Q2), pour générer la suite des deuxièmes images (Z1, Z2, Z3, A3) la suite des images décodées (D1_Q1, D1_Q2, ..., DM_Q1, DM_Q2) étant prise en compte avec une et en particulier la première étape de qualité d'images (Q2) la plus élevée.

7. Procédé de codage d'images selon l'une des revendications précédentes,
**caractérisé en ce que**
dans le cadre du procédé de codage d'images un train de bits (BS) est généré de telle sorte qu'il comprend au moins une reconnaissance (KN) qui indique l'utilisation d'au moins une image décodée (D1, D1_Q1, D1_Q2) lors de la génération d'au moins une deuxième image (Z1, A3).

8. Procédé de décodage d'images, **caractérisé par** les étapes de décodage d'au moins une image codée conformément au procédé de codage d'images selon l'une des revendications précédentes, en particulier d'une des deuxièmes images (Z1, Z2, Z3, A3), une suite d'images originales reconstituées (K1, ..., KN) étant générée à l'aide d'un deuxième procédé de décodage (DV2), qui est un décodage d'un codage en sous-bandes à filtrage temporel et compensation de mouvement, à partir d'une suite de deuxièmes images (Z1, Z2, Z3, A3),
- au moins une zone d'image d'une des deuxièmes images (Z1) étant décodée à l'aide d'un mode de décodage INTER du deuxième procédé de décodage (DV2), **caractérisé en ce qu'**
- au moins une des images (D5) générées par le biais d'un premier procédé de codage (CV1) et ensuite décodées est utilisée en tant qu'image de référence (RB) par le biais du mode de décodage INTER, le premier procédé de codage étant un codage prédictif à compensation de mouvement, et
- une autre image originale (O5) est représentée par le biais de l'image décodée (D5) utilisée en tant qu'image de référence (RB, différente de l'image originale (O4) qui est représentée par le biais de la deuxième image (Z1) de la zone d'image à décoder.

9. Procédé de décodage d'images selon la revendication 8,
**caractérisé en ce que**
dans le cadre du procédé de décodage d'images un train de bits (BS) est décodé, dans lequel il comprend au moins une reconnaissance (KN) qui indique l'utilisation d'au moins une image décodée (D1, D1_Q1, D1_Q2) lors de la génération d'au moins une deuxième image (Z1, A3).

10. Dispositif de codage (EV), comportant des moyens permettant d'exécuter un procédé de codage d'images en particulier selon l'une des revendications 1 à 7, comportant
a) un premier moyen (M1) permettant de générer une suite d'images décodées (D1, ..., DM) à partir d'une suite d'images originales (01, ..., ON), en générant à partir de la suite d'images originales (01, ..., ON) à l'aide d'un premier procédé de codage (CV1), qui est un codage prédictif à compensation de mouvement, une suite d'images codées (B1, ..., BM), à partir desquelles sont ensuite obtenues les images décodées (D1, ..., DM),
b) un deuxième moyen (M2) permettant de générer une suite de deuxièmes images (Z1, Z2, Z3, A3) à partir d'un groupe d'images (GOP) de la suite d'images originales (01, ..., ON) à l'aide d'un deuxième procédé de codage (CV2), qui est un codage en sous-bandes à filtrage temporel et compensation de mouvement,
- au moins une zone d'image d'une des deuxièmes images (Z1) étant codée à l'aide d'un mode de codage INTER du deuxième procédé de codage (CV2), **caractérisé en ce qu'**
- au moins une des images décodées (D5) est utilisée en tant qu'image de référence (RB) par le biais du mode de codage INTER, et
- une autre image originale (O5) est représentée par le biais de l'image décodée (D5) utilisée en tant qu'image de référence (RB), différente de l'image originale (O4) qui est représentée par le biais de la deuxième image (Z1) de la zone d'image à coder.

11. Dispositif de codage (EV) selon la revendication 10,
**caractérisé par**
un moyen d'envoi (MS) permettant d'envoyer un train de bits (BS), qui est généré de telle sorte qu'il comprend au moins une reconnaissance (KN) qui indique l'utilisation d'au moins une image décodée (D1, D1_Q1, D1_Q2) lors de la génération d'au moins une deuxième image (Z1, A3).

12. Dispositif de décodage (DV), comportant des moyens permettant d'exécuter un procédé de décodage d'images en particulier selon la revendication 8 ou 9, comportant un troisième moyen (M3) permettant de générer une suite d'images originales reconstituées (K1, ..., KN) à l'aide d'un deuxième procédé de décodage (DV2), qui est un décodage d'un codage en sous-bandes à filtrage temporel et compensation de mouvement, à partir d'une suite de deuxièmes images (Z1, Z2, Z3, A3),
- au moins une zone d'image d'une des deuxièmes images (Z1) étant décodée à l'aide d'un mode de décodage INTER du deuxième procédé de décodage (DV2), **caractérisé en ce qu'**
- au moins une des images (D5) générées par le biais d'un premier procédé de codage (CV1) et ensuite décodées est utilisée en tant qu'image de référence (RB) par le biais du mode de décodage INTER, le premier procédé de codage étant un codage prédictif à compensation de mouvement, et
- une autre image originale (O5) est représentée par le biais de l'image décodée (D5) utilisée en tant qu'image de référence (RB), différente de l'image originale (O4) qui est représentée par le biais de la deuxième image (Z1) de la zone d'image à décoder.

13. Dispositif de décodage (DV) selon la revendication 12,
**caractérisé par**
un moyen de réception (ME) permettant de recevoir un train de bits (BS), qui comprend au moins une reconnaissance (KN) qui indique l'utilisation d'au moins une image décodée (D1, D1_Q1, D1_Q2) lors de la génération d'au moins une deuxième image (Z1, A3).
